# EUROPEAN PATENT APPLICATION

(11) **EP 2 884 594 A1**
(43) Date of publication of application: **17.06.2015**
(21) Application number: 14157197.6
(22) Date of filing: 28.02.2014
(51) Int. Cl.: H01R 13/52, H01R 24/52, H02G 15/013

(54) **Waterproof assembly**

(30) Priority: 11.12.2013 CN 201320809661 U; 29.01.2014 US 201414167400
(71) Applicant: Changzhou Amphenol Fuyang Communication Equipment Co., Ltd., Hi-Tech District, Wujin Changzhou Jiangsu 213164 (CN)
(72) Inventor: Xu, Yiming, Changzhou Jiangsu 213164 (CN); Sheng, Tingxing, Changzhou Jiangsu 213164 (CN)
(74) Representative: Wendels, Stefan

(57) **Abstract**

A waterproof assembly that includes a neck that has a main body and an end that has an engagement member. A protective cover of the assembly includes a hollow body with opposite open ends and forms a receiving cavity. Each open end has at least one waterproof gasket. One of the open ends extends around and is sealably coupled to the main body of the neck.

## Description

### FIELD OF THE INVENTION

The present invention relates to a waterproof assembly that protects and seals the junction of a cable assembly and mated connector.

### BACKGROUND OF THE INVENTION

In mobile communication base stations or indoor coverage systems, for example, connectors are necessary to send high frequency signals and power. In an antenna feed system, in particular, which is used in a mobile communication base station, the conventional way of protecting the associated connector from being corroded is to wrap the connector with plaster or rubber. However, such wrapping often does not effectively protect the connector because of water seepage resulting in damage to the equipment. Therefore, there is a need for a device that seals the junction of a connector and its mated cable assembly to prevent water damage.

### SUMMARY OF THE INVENTION

Accordingly, the present invention provides a waterproof assembly that includes a neck that has a main body and an end that has an engagement member. A protective cover of the assembly includes a hollow body with opposite open ends and forms a receiving cavity. Each open end has at least one waterproof gasket. One of the open ends extends around and is sealably coupled to the main body of the neck.

The present invention may also provide a waterproof assembly that includes a neck that has a main body and an end that has an engagement member. The engagement member is configured to engage a cable assembly. A protective cover of the assembly includes a hollow body with opposite open ends and forms a receiving cavity for receiving the cable assembly. Each open end has at least one waterproof gasket. One of the open ends extends around and is sealably coupled to the main body of the neck.

The present invention may further provide a waterproof assembly that includes a cable assembly that has a coupling nut terminated to a cable and a connector that has a neck. The neck has a main body and an end. The end has an engagement member that engages the coupling nut of the cable assembly. A protective cover that includes a hollow body with opposite open ends, forms a receiving cavity that receives the cable assembly. Each open end has at least one waterproof gasket. One of the open ends of the protective cover extends around and is sealably coupled to the main body of the neck and the other of the open ends of the protective cover extends around and is sealably coupled to the cable.

With those and other objects, advantages, and features of the invention that may become hereinafter apparent, the nature of the invention may be more clearly understood by reference to the following detailed description of the invention, the appended claims, and the several drawings attached herein.

### BRIEF DESCRIPTION OF THE DRAWINGS

FIG. 1 is a cross-sectional view of the waterproof assembly according to an exemplary embodiment of the present invention;
FIG. 2 is a side elevational view of a connector of the waterproof assembly illustrated in FIG. 1;
FIG. 3 is a side elevational view of a cable assembly used with the waterproof assembly illustrated in FIG. 1; and
FIG. 4 is a cross-sectional view of a cover of the waterproof assembly illustrated in FIG. 1.

### DETAILED DESCRIPTION OF THE EXEMPLARY EMBODIMENTS

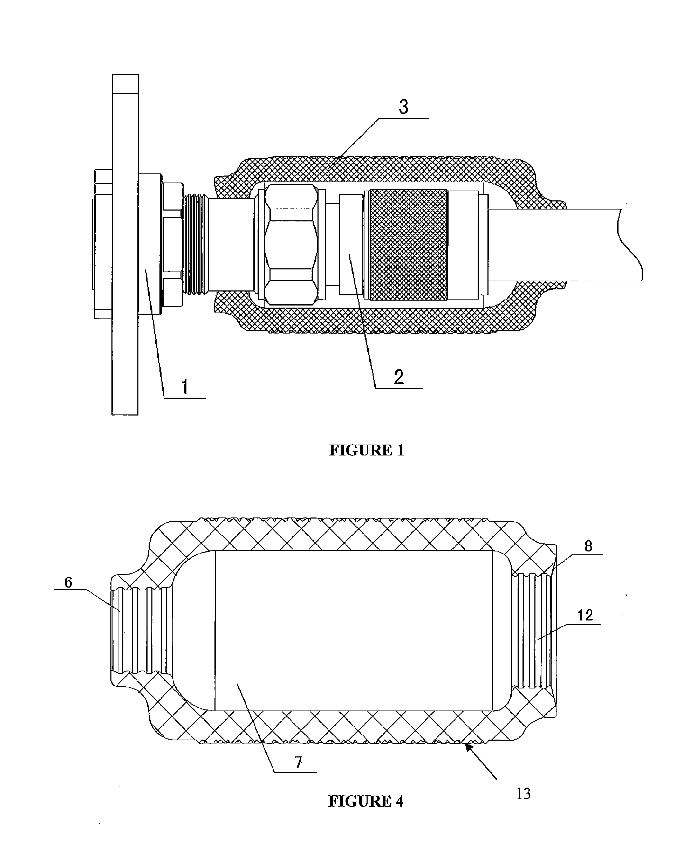

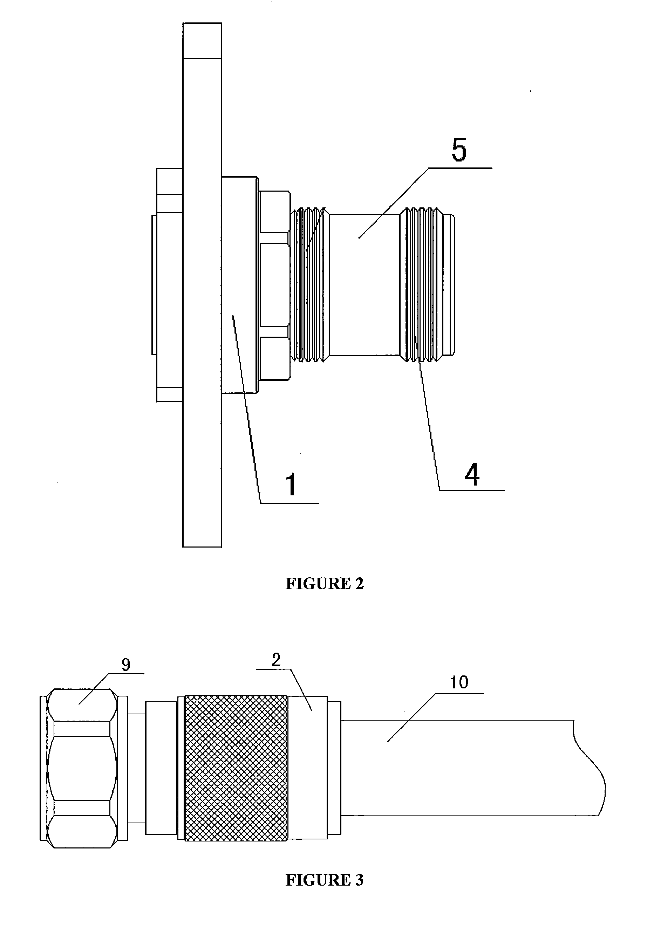

The following is detailed description of an exemplary embodiment of the present invention in combination with FIGS. 1-4. A waterproof assembly of the present invention provides waterproof protection to the junction of a connector 1 and a cable assembly 2. As seen in FIGS. 1 and 2, the connector 1 includes a neck 5 configured to engage the cable assembly 2. In particular, at an end of the neck 5 is an engagement member 4 configured to engage the cable assembly 2. The engagement member 4 is preferably threads. The threads of the engagement member 4 forms an outer diameter that is preferably larger than the outer diameter of the main body of the neck 5.

As seen in FIG. 3, the cable assembly 2 includes a connector that is terminated to end of a cable 10 in a known manner. The connector includes a coupling nut 9 which rotates with respect to the cable 10. The cable 10 may be of a spiral or corrugated structure. The coupling nut 9 preferably has internal threads that engage the threads 4 at the end of the neck 5, as best seen in FIG. 1.

The waterproof assembly of the present invention further includes a protective cover 3 that covers the end of the cable assembly 2 including the coupling nut 9 and also covers a portion of the neck 5, as seen in FIG. 1. The protective cover 3 is preferably a hollow structure defining a receiving cavity 7. The protective cover 3 has opposite open ends 6 and 12. The open ends 6 and 12 preferably have inner diameters that are smaller than the inner diameter of the receiving cavity 7. The protective cover 3 is preferably formed of a rubber material.

Both open ends 6 and 12 of the protective cover 3 preferably include one or more waterproof gaskets, as seen in FIG. 4. The gaskets may be formed as inner grooves formed into the inner surface of the open ends 6 and 12, respectively, or may be separate waterproof gaskets disposed in inner groove in each end 6 and 12. The inner diameter of the open end 6 of the protective cover 3 is sized such that it can be tightly sleeved onto the main body of the neck 5 so that the open end extends around and sealably couples to the neck 5. Similarly, the inner diameter to the open end 12 is sized such that it can be tightly sleeved over the cable 10, whether a spiral or corrugated configuration.

By sealably coupling the open ends 6 and 12 of the protective cover 3 to the neck 5 and the cable 10 via the waterproof gaskets, the junction of the neck 5 and the cable assembly 2 is protected and sealed. The waterproof protective cover 3 will also not fall off even in its natural state, thus guaranteeing a waterproof junction. After the protecting cover 3 is sleeved, it inclines inwards on the neck 5, so as to further guarantee the waterproof function. The end of the open end 12 may be provided with a chamfer 8 to facilitate pushing of the protective cover over onto the connector 1 and cable assembly 2. The outer surface of the protecting cover 3 may be provided with an anti-slide layer 13 to increase the friction, thereby facilitating assembly and disassembly of the cover 3.

Although certain presently preferred embodiments of the disclosed invention have been specifically described herein, it will be apparent to those skilled in the art to which the invention pertains that variations and modifications of the various embodiments shown and described herein may be made without departing from the spirit and scope of the invention.

Thus, the waterproof assembly according to the description above, is configured that said engagement member is threads and an outer diameter of said engagement member is larger than said main body of said neck.

The waterproof assembly may further comprising a plurality of waterproof gaskets disposed in each open end of said protective cover.

The waterproof assembly may be configured that said open end of said protective cover that extends around said cable having a chamfer. Furthermore, the waterproof assembly may comprise the said protective cover formed of rubber.

It is further possible to provide a waterproof assembly, wherein an outer surface of said protective cover has an anti-slide layer.

Accordingly, it is intended that the invention be limited only to the extent required by the appended claims and the applicable rules of law.

## Claims

1. A waterproof assembly, comprising:
a neck having a main body and an end, said end having an engagement member; and
a protective cover including a hollow body with opposite open ends, said hollow body forming a receiving cavity, each open end having at least one waterproof gasket, one of said open ends extending around and being sealably coupled to said main body of said neck.

2. A waterproof assembly according to claim 1, wherein
said engagement member is threads.

3. A waterproof assembly according to claim 2, wherein
an outer diameter of said engagement member is larger than said main body of said neck.

4. A waterproof assembly according to claim 1, further comprising a plurality of waterproof gaskets disposed in each open end of said protective cover.

5. A waterproof assembly according to claim 1, wherein
at least one of said open ends of said protective cover having a chamfer.

6. A waterproof assembly according to claim 1, wherein
said protective cover is formed of rubber.

7. A waterproof assembly according to claim 6, wherein
an outer surface of said protective cover has an anti-slide layer.

8. A waterproof assembly, comprising:
a neck having a main body and an end, said end having an engagement member, said engagement member being configured to engage a cable assembly; and
a protective cover including a hollow body with opposite open ends, said hollow body forming a receiving cavity for receiving the cable assembly, each open end having at least one waterproof gasket, one of said open ends extending around and being sealably coupled to said main body of said neck.

9. A waterproof assembly according to claim 8, wherein
said engagement member is threads.

10. A waterproof assembly according to claim 9, wherein
an outer diameter of said engagement member is larger than said main body of said neck.

11. A waterproof assembly according to claim 9, further comprising
a plurality of waterproof gaskets disposed in each open end of said protective cover.

12. A waterproof assembly according to claim 11, wherein
at least one of said open ends of said protective cover having a chamfer.

13. A waterproof assembly according to claim 12, wherein
said protective cover is formed of rubber.

14. A waterproof assembly according to claim 13, wherein
an outer surface of said protective cover has an anti-slide layer.

15. A waterproof assembly, comprising:
a cable assembly including a coupling nut terminated to a cable;
a connector including a neck having a main body and an end, said end having an engagement member engaging said coupling nut of said cable assembly; and
a protective cover including a hollow body with opposite open ends, said hollow body forming a receiving cavity that receives said cable assembly, each open end having at least one waterproof gasket, one of said open ends of said protective cover extending around and being sealably coupled to said main body of said neck and the other of said open ends of said protective cover extending around and being sealably coupled to said cable.
